# EUROPEAN PATENT APPLICATION

(11) **EP 3 482 809 A1**
(43) Date of publication of application: **15.05.2019**
(21) Application number: 17201578.6
(22) Date of filing: 14.11.2017
(51) Int. Cl.: B01D 25/00, B01D 25/176

(54) **FILTER ELEMENT AND METHOD FOR PRODUCING THE SAME**

(71) Applicant: Sefar AG, 9410 Heiden (CH)
(72) Inventor: PETIT, Sandrine, 59215 Abscon (FR); DEMARET, Freddy, 59553 Cuincy (FR); DELEBECQUE, Vincent, 59960 Neuville en Ferrain (FR)
(74) Representative: Wunderlich & Heim Patentanwälte Partnerschaftsgesellschaft mbB

(57) **Abstract**

The invention relates to a filter element for a filter press having at least one press plate with a first filter side and a second filter side, both filter sides being connected by a central channel, the filter element comprises a first part of filter material to be disposed in the first filter side of the press plate and a second part of filter material to be disposed on the second filter side of the press plate, wherein the first part and the second part of filter material are connected by the connection tube to be inserted into the central channel of the press plate. According to the invention, the connection tube comprises a tube body having an inner diameter, an outer diameter and a substantially wall thickness, wherein at least at one end of the connection tube a ring-shaped front face is formed having a width according to the wall thickness of the connection tube, and one part of filter material is directly fixed on the ring-shaped front face of the connection tube. Furthermore, the invention relates to a filter press and a method for producing such a filter element.

## Description

The invention relates to a filter element for a filter press having at least one press plate with a first filter side and a second filter side, both filter sides being connected by a central channel, the filter element comprises a first part of filter material to be disposed on the first filter side of the press plate and a second part of filter material to be disposed on the second filter side of the press plate, wherein the first part and the second part of filter material are connected by a connection tube to be inserted into the central channel of the press plate, according to the preamble of claim 1.

Furthermore, the invention relates to a method for producing such a filter element according to the preamble of claim 12.

Filter press plates for filter presses, also called plate filter presses, are known. Such filter press plates generally have a centrally positioned flow-opening used for the passage of the liquid to be filtered. In the filter press several filter press plates are so juxtaposed and pressed that the flow-openings or channels are aligned and form a common channel, by which the liquid to be filtered is fed into the filter.

A flexible channel tube for fixing the filter areas in the vicinity of the central channel is e.g. known from WO 01/89657 A1. At its opposite front ends the known channel tube has in each case a flange, on which a filter area of filter material is located.

For installing such a known filter element in a filter press plate it is necessary to push and/or pull one of the two filter areas through the channel of the filter press plate, the other filter area being left behind the channel. To be able to position the passage tube with its flange sections in the channel it is deformed during pushing or pulling through.

The ring-shaped flange is needed for secure fixation of the filter areas of filter material with the central tube. However, the larger the flange, the higher the forces for pushing and pulling the filter element through the channel in the press plate.

A similar filter element is known form document WO 93/18838 A1.

Furthermore, it is known from EP 1 925 351 A1 to construct the central channel tube in a multipart manner. Each part comprises at one end a flange for connection with the filter material. At the other end of each part connecting means are provided which allow a releasable connection between both parts or a third interconnecting member.

Similar arrangements with a multipart tube are known from WO 93/18839 A1, WO 95/07743 A1 or EP 2 682 171 A1. Such an arrangement allows a more simple mounting of the filter element on the press plate. However, the construction of the multipart tube is more complicated and expensive.

A duplex filter cloth which comprises two filter cloth pieces is known from document US 5,186,998. Each filter cloth piece comprises a turned-down collar portion having a cylindrical shape. Both cylindrical collar portions are secured together by stitching for forming a cylindrical connection portion.

The **object** of the invention is to provide a filter element for a filter press and a method for producing the same, by which a filter element having a high stability and excellent filter efficiency is achieved.

According to the invention this object is achieved by a filter element having the features of claim 1 and a method having the features of claim 12. Preferred embodiments are given in the dependent claims.

The filter element according to the invention is characterized in that the connection tube comprises a regular tube having an inner diameter, an outer diameter and a substantially constant wall thickness, wherein at least at one end of the connection tube a ring-shaped front face is formed having a width according to the wall thickness of the connection tube, and one part of filter material is directly fixed on the ring-shaped front face of the connection tube.

A fundamental idea of the invention is considered to be the construction of the filter element having a tube without any ring-shaped flange. A ring-shaped flange impedes an efficient mounting of a one-piece filter element on a filter press plate. Furthermore, the area of the ring-shaped flange disturbs and reduces the area of the filter material and consequently the filtration performance and efficiency of the filter element. As a flange is avoided, the cleaning of the filter material is facilitated.

According to a further aspect of the invention, the object is solved by direct fixation of the filter material on the ring-shaped front face of the connection tube. According to the invention it was recognized that the fixation of the filter material at the ring-shaped front face is sufficient for a reliable connection between the filter material and the central tube. Preferably, the tube is a plastic tube, which is cut in the desired length from a standard tube. As a filter element according to the invention does not have any flange, it can be efficiently produced, easily mounted on a filter press plate and the filter element provides a great surface area for filtration.

In a particularly preferred manner of the invention, the connection tube comprises a first ring-shaped front face at one end and a second ring-shaped front face on the other end, and the first part of the filter material is fixed to the first front face and the second part of filter material is fixed to the second front face. Thus, a one-piece filter element is provided. The connection tube comprises a length, which corresponds to the width of the filter press plate. Usually, the first and second part of filter material have a rectangular shape according to the outer contour of the press plate.

The surface of the ring-shaped front face comprises any appropriate contour being suitable for the fixation of the filter material. According to a preferred embodiment of the invention, the at least one ring-shaped front face is planar. Preferably, both front faces are planar. This allows a particularly reliable connection between the tube and the filter material.

A particularly preferred kind of fixation lies in that the part of filter material is fixed to the front face by gluing. Gluing is advantageous for connecting elements of different material. For example, a metal tube can be used, on which a polymer filter material is fixed. Furthermore, the regular tube could be made out of plastic material.

Another preferred embodiment of the invention consists in the fact that the filter material and/or the tube are made out of a thermoplastic material and are fixed together by welding, melting or extruding. In particular, the filter material and/or the tube are heated and pressed together for forming a connection. Furthermore, welding is carried out by any suitable welding method, in particular by ultrasonic welding.

According to a further embodiment of the invention, the filter material and/or the material of the tube comprises PA, PVC, PMMA or any other suitable thermoplastic polymer. This allows an efficient production and provides a robust filter element.

According to another preferred embodiment of the invention, the connection tube comprises at least two tube parts being connected, wherein a first tube part is fixed to the first part of filter material and a second tube part is fixed to the second part of filter material. The tube channel is designed in a multipart manner having at least two parts or pieces. One tube part is connected to the first part of filter material, while the second part of filter material is fixed to the second tube part. Such a multipart tube facilitates the mounting of the filter element on a press plate.

It is particularly advantageous that the first tube part and the at least second tube part are connected together by releasable connecting means. The connecting means can comprise snap-on-elements, latching elements or threated fittings. The connecting means can be arranged directly on the first and second tube part. According to another embodiment, the connecting means can comprise additional parts, for example a third central tube element on which the other tube parts are releasably fixed.

Another preferred embodiment of the invention lies in that the part of the filter material comprises a central through hole, which has a diameter that is equal to or larger than the internal diameter of the ring-shaped front face and smaller than the outer diameter of the ring-shaped front face. Each part of filter material comprises a central through hole, which is surrounded by a connecting edge. The filter material and/or the connecting edge has a diameter, which is equal to or larger than the internal diameter of the ring-shaped front face of the connection tube. Furthermore, the connecting edge is smaller than the outer diameter of the ring-shaped front face. The connecting edge can be prepared for an enhanced fixation. The connecting edge can comprise a seam, particularly a reinforced seam, which is provided by stitching or hot melt treatment. The hot melt treatment can be carried out during fixation, in particular welding of the filter material to the tube.

In general, the filter material can be any material, in particular a flat material, which is suitable for filtration. In particular, it is preferred that the filter material comprises a filter cloth, a woven or non-woven filter material and/or a filter membrane. The filter element can comprise a combination of these materials.

The invention also includes a filter press having one or more press plates with a first filter side and a second filter side, both filter sides being connected by a central channel, wherein at least one filter element according to the invention is provided. Usually, such a filter press comprises a plurality of press plates having a more or less centrally positioned flow-opening or channel used for the passage of the liquid to be filtered.

By pressing means the press plates with the arranged filter elements are so juxtaposed and pressed that the flow openings or channels are aligned and form a common channel, by which a liquid to be filtered is fed into the filter press. By such a filter press a cake forming filtration can be performed. Liquid is pressed through the filter material to the sides of the press plate, wherein the filtered liquid is discharged by ducts in the press plate, while solid particles in the liquid form a filter cake at the outside of the filter material. After the filtration step, the filter press is opened and the filter cakes can be removed from the filter material. If necessary, the filter material can be cleaned to remove residual particles. The use of filter elements according to the invention allows an efficient cleaning of the filter material, since flanges at the through holes are avoided.

The inventive method for producing a filter element is characterized in that a connection tube is provided, the connection tube comprising a regular tube having an inner diameter, an outer diameter and a substantially constant wall thickness, wherein at least at one end of the connection tube a ring-shaped front face is formed having a width according to the wall thickness of the connection tube, and one part of the filter material is directly fixed in the ring-shaped front face of the connection tube.

With this inventive method, a filter element as prescribed can be produced in a simple and efficient manner.

The invention is described hereunder with reference to preferred embodiments that are schematically illustrated in the attached drawings. The illustrations show the following:
- Fig. 1: a perspective view of a filter element according to the invention, and
- Fig. 2: a perspective view of a connection tube for a filter element according to the invention.

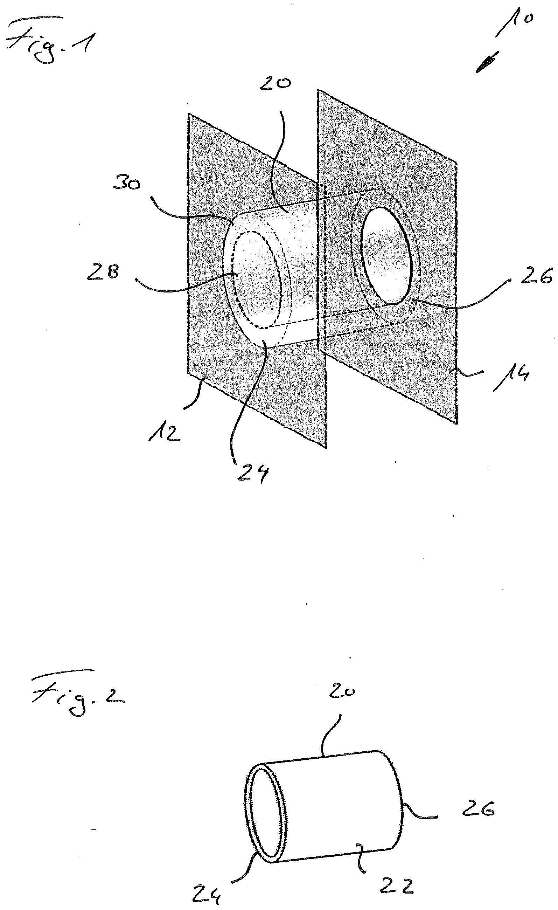

An inventive filter element 10 having a central connection tube 20 and a first part 12 and a second part 14 of flat filter material is shown in fig. 1.

As is illustrated in more detail in fig. 2, the connection tube 20 is formed by a tube body 22 usually made by cutting out of a regular plastic tube. The connection tube 20 has a defined length according to the width or thickness of a press plate of a filter press to which the filter element should be mounted. Furthermore, the connection tube 20 has a given outer diameter and a given inner diameter and a substantially constant wall thickness. At one end a flat first ring-shaped front face 24 and at the other end a flat second ring-shaped front face 26 are provided.

The first part 12 and the second part 14 of filter material have a rectangular shape according to the contour of the press plate to which the filter element 10 is to be mounted. In a central portion the first part 12 and the second part 14 of filter material a through hole 28 is arranged. In this embodiment of a filter element 10, the diameter of the through hole 28 is identical to the inner diameter of the connection tube 20.

According to the invention, the first part 12 and the second part 14 of filter material are fixed directly on the first ring-shaped front face 24 and the second ring-shaped front face 26, respectively. Preferably, the fixation is carried out by gluing or welding, particularly by ultrasonic welding. In such a case, the connection tube 20 is made out of a thermoplastic polymer material.

According to the thickness of the connection tube 20, a connection edge 30 is provided around the through hole 28 at each part 12, 14 of filter material. The fixation process is carried out in the area of this connection edge 30 or connection seam.

As can be seen from fig. 1, a filter element 10 is formed without out any radial flange at the connection tube 20. Consequently, the inventive filter element 10 can be efficiently produced, easily mounted on a filter press plate and a great surface area for filtration is provided without any reduction of the surface by the flange. Furthermore, without any flange, the filter element 10 can be cleaned more easily and efficiently.

## Claims

1. Filter element for a filter press having at least one press plate with a first filter side and a second filter side, both filter sides being connected by a central channel,
the filter element (10) comprises a first part (12) of filter material to be disposed on the first filter side of the press plate and a second part (14) of filter material to be disposed on the second filter side of the press plate,
wherein the first part (12) and the second part (14) of filter material are connected by a connection tube (20) to be inserted into the central channel of the press plate,
**characterized in that**
- the connection tube (20) comprises a tube body (22) having an inner diameter, an outer diameter and a substantially constant wall thickness, wherein at least at one end of the connection tube (20) a ring-shaped front face (24) is formed having a width according to the wall thickness of the connection tube (20), and
- one part (12. 14) of filter material is directly fixed on the ring-shaped front face (24) of the connection tube.

2. Filter element according to claim 1,
**characterized in that**
- the connection tube (20) comprises a first ring-shaped front face (24) at one end and a second ring-shaped front face (25) at the other end, and
- the first part (12) of filter material is fixed to the first front face (24) and the second part (14) of filter material is fixed to the second front face (26).

3. Filter element according to claim 1 or 2,
**characterized in that**
the at least one ring-shaped front face (24, 26) is planar.

4. Filter element according to any one of the claims 1 to 3,
**characterized in that**,
the part (12, 14) of filter material is fixed to the front face by gluing.

5. Filter element according to any one of the claims 1 to 3,
**characterized in that**
the filter material and/or the connection tube (20) are made out of a thermoplastic material and are fixed together by welding, melting or extruding.

6. Filter element according to any one of the claims 1 to 5,
**characterized in that**
the filter material and/or the material of the connection tube (20) comprises PA, PVC, PMMA or any other suitable thermoplastic polymer.

7. Filter element according to any one of the claims 1 to 6,
**characterized in that**
the connection tube (20) comprises at least two tube parts being connected, wherein a first tube part is fixed to the first part of filter material and a second tube part is fixed to the second part of filter material.

8. Filter element according to claim 7,
**characterized in that**
the first tube part and the at least second tube part are connected together by releasable connecting means.

9. Filter element according to any one of the claims 1 to 8,
**characterized in that**
the part (12, 14) of the filter material comprises a central through hole (28), which has a diameter that is equal or larger than the internal diameter of the ring-shaped front face (24, 26) and smaller than the outer diameter of the ring-shaped front face (24, 26).

10. Filter element according to any one of the claims 1 to 9,
**characterized in that**
the filter material comprises a filter cloth, a woven or non-woven filter material and/or a filter membrane.

11. Filter press
having one or more press plates with a first filter side and a second filter side, both filter sides being connected by a central channel,
**characterized in that**
at least one filter element (10) according to any one of the claims 1 to 10 is provided.

12. Method for producing a filter element (10) according to any one of the claims 1 to 10,
**characterized in that**
- a connection tube (20) is provided, the connection tube (20) comprising a tube body (22) having an inner diameter, an outer diameter and a substantially constant wall thickness, wherein at least at one end of the connection tube (20) a ring-shaped front face (24, 26) is formed having a width according to the wall thickness of the connection tube (20), and
- one part (12, 14) of filter material is directly fixed on the ring-shaped front face (24, 26) of the connection tube (20).
